# EUROPEAN PATENT SPECIFICATION

(11) **EP 2 673 618 B1**
(45) Date of publication and mention of the grant of the patent: **26.04.2017**
(21) Application number: 12716694.0
(22) Date of filing: 10.02.2012
(51) Int. Cl.: G01N 15/14, G01N 1/22, C12M 1/26

(54) **DEVICE AND METHOD FOR DETECTING SPORES**
VORRICHTUNG UND VERFAHREN ZUR ERKENNUNG VON SPOREN
DISPOSITIF ET PROCÉDÉ POUR LA DÉTECTION DE SPORES

(30) Priority: 11.02.2011 NL 2006189; 14.04.2011 NL 2006600
(43) Date of publication of application: 18.12.2013
(73) Proprietor: Dutch Water Technologies B.V., 8934 CJ Leeuwarden (NL)
(72) Inventor: JANSEN, Gijsbert, Johan, NL-9061DK Giekerk (NL)
(74) Representative: Verdijck, Gerardus
(86) International application number: PCT/NL2012/000014
(87) International publication number: WO 2012/144886

(56) References cited:
- EP-A1- 0 668 095
- US-A- 5 498 271
- US-A- 5 880 835
- US-A1- 2004 038 385
- US-A1- 2004 047 502
- US-A1- 2006 227 324
- US-A1- 2008 171 398
- US-A1- 2009 126 514

## Description

The present invention relates to a device for detecting spores, and in particular fungal spores. The invention relates more particularly to an analysis device with which spores, such as Phytophthora, can be collected from the air, detected and analyzed. Diverse applications are possible for such a device, the device thus being particularly suitable for instance for application in potato production.

Detection of spores takes place in conventional manner by analyses in the laboratory. This is time-consuming and relatively costly. In addition, sample-taking is relatively difficult.

US 2008/171398 discloses a system to detect and identify various aerosol agents.

US 2004/038385 A1 discloses a system for autonomous monitoring of bio-agents comprising a collector, sample preparation means and detector.

US 5 498 271 A discloses a diesel particle virtual impactor sampler having a minor flow outlet and a major flow outlet for determination of the concentration of particles above and below a cutoff point.

Detection of spores is relevant in a wide field of application. This is certainly the case in the cultivation/production and processing of potatoes, vegetables and fruit. In the cultivation of potatoes Phytophthora are thus a major threat to crop quality and yield. In practice the crop is usually sprayed with fungicides during growth. In order to limit the amount of fungicide used, use is sometimes made of risk-prediction models which indicate the desirability of fungus control. A considerable amount of fungicide is however still applied to the crop on the basis hereof. This has consequences in respect of costs, amount of work, health aspects for users of the fungicides and possibly for the consumer, and for the environment in the immediate vicinity.

An object of the invention is to obviate or at least reduce these problems and to enable an effective and efficient detection of spores.

This object is achieved with the device according to claim 1.

Through the use of a housing the different components of the housing can be provided in effective manner. An additional advantage of a housing is that it can be placed in the immediate vicinity where spores have to be detected. This is for instance directly in or in the vicinity of a potato field.

In addition to use for measuring Phytophthora for the purpose of potatoes, is also possible to utilize the device according to the invention in horticulture. The device according to the invention can additionally or alternatively be employed to measure fungi such as Botrytis and Alternaria, bacteria such as anthrax (Bacillus Anthracis) and Legionella. Diverse types of aerosol and pollen can also be measured, for instance for the purpose of determining the risk of hay fever.

The inlet is preferably provided with a filter for holding back large particles, for instance leaves, and preventing them entering the separating device.

The inlet is preferably operatively connected to a fan with which an air sample can be drawn in through the inlet. The fan is driven by a motor which is preferably also provided in the housing.

According to the invention, the separating device is embodied as a cyclone. Vortices are hereby realized in the indrawn airflow such that particles in the air are separated to size.

The cyclone is provided here with an additional cone for expansion of indrawn air. In a currently recommended preferred embodiment according to the invention air is drawn in from above and compressed in a first cone. The larger parts are flung/carried to the outer side by the additional second cone. By applying the additional cone in the cyclone according to the invention a reverse separation takes place, wherein at least some of the lighter parts, such as fungal spores, are carried to the outer side where the sampling preferably takes place.

In the currently preferred embodiment a distribution of particles is hereby obtained over a cross-section in the cyclone such that the large particles can be discharged in the centre, in the vicinity of the central axis of the cyclone, and that at least some of the small particles, including at least a significant part of the spores, are positioned on the side walls of the cyclone.

The dimensioning the cyclone is preferably such that a separation is achieved between particles with a dimension larger and smaller than a determined size. This size is for instance about 150 µm.

An annular element with a central opening is preferably arranged at the outer end of the cyclone. The central opening enables discharge of air with the relatively large particles. The annular element is preferably provided with a channel or groove in which the small particles, such as the spores, can be collected.

Preferably provided between the annular element serving to collect the sample and the cyclone is a gap-like opening, for instance of about said 150 µm, with which access is gained to the annular element. In a currently preferred embodiment an additional cone where air expands is provided inside the annular element.

The channel or groove is preferably wholly or partially filled with a liquid during use. Such a liquid can be water, although it can also be another liquid such as glycerol or a mixture of glycerol and water. It is preferably a liquid with a relatively high evaporation temperature such that the liquid remains present as long as possible in the channel or groove. The particles are collected in the liquid and subsequently, once a full sample has been taken, carried through a discharge into the channel or the groove and made suitable for measurement.

It has been found that the use of glycerol or a glycerol mixture is particularly advantageous. Glycerol has the advantage compared to (pure) water that, because it counters evaporation of the liquid, a measurement is possible over a longer sampling period. This further increases the reliability and/or accuracy of the measurement.

In a currently preferred embodiment the liquid is carried out of the channel or the groove to a flow cell with which a measurement can be performed on the liquid. The liquid is pumped for this purpose from the liquid ring to the flow cell. This channel can take an elongate form. Other embodiments are of course also possible.

The cell, preferably in the form of a flow channel, is preferably provided in a holder with which the liquid is held between two plates, preferably transparent plates such as glass plates. The holder is preferably also provided with adjusting means for adapting the dimensions of the channel to the size of the measurement sample coming from the separating device. In an embodiment with glass plates the mutual spacing thereof is for instance adjustable. A reliable measurement can hereby be realized, substantially irrespective of the size of the measurement sample.

A preferably adjustable selection of the height of the flow channel, for instance by making possible a channel height of about 200 µm, achieves that channel dimensions can be adapted to the particles to be measured and/or the quantity of measurement liquid.

In a currently preferred embodiment the measuring and analysis element is provided with a camera. Images are made of the measurement sample using the camera. Since the spores, if present in the air sample taken, are likewise present in the measurement sample, the spores are also recorded on such an image.

The distance between the camera and the flow channel is preferably adjustable. The camera can hereby be focused. It has been found that focusing of the camera on the underside of the channel generates the best results. This can be explained in that, at a relatively low flow speed through the channel, the particles to be measured are deposited or settle out to some extent. This occurs for instance in the measurement of Phytophthora and Botrytis, whereby it is possible to work with a camera without auto-focus.

The camera is preferably provided with and/or operatively connected to processing equipment for processing the images. Such processing comprises for instance one or more of the steps of enlarging images, providing and/or removing contrasts and so on. The element is preferably also provided with analysis means, preferably digital means, whereby a type of filter can optionally be laid over the images. It is hereby possible for instance to filter according to size. Specific characteristics on the optionally processed images are then measured, preferably automatically. These are for instance one or more of the characteristics such as size, diameter, shape, length/width ratios, shape of the periphery, which can be determined from a specific particle visible on a measuring image.

In addition to the stated characteristics, use can also be made of surface, bending energy of acute angle in periphery, the number of acute angles in the periphery, ratio of intermediate distances and main axis, shape factor and elliptical fit.

It is then possible to determine on the basis of these characteristics which spores are present in the air sample. Preferably also shown here is a chance or indication of the reliability of this assessment. Although the above stated measurement principle can be advantageously applied and produces good results, other measurement principles are likewise possible.

In a currently preferred embodiment the classification of the spores takes place using a classification scheme, wherein use is made of a neural network for the purpose of assigning a particle to a species with a determined certainty. Although the above stated classification can be applied advantageously and produces good results, other classification methods are likewise possible, such as Support Vector Machine classification.

The device is preferably provided with a control element for controlling the device. The control controls the fan, pump and valves. The control preferably also regulates the sampling times and the sampling time durations. This time duration depends for instance on the measured concentrations and other factors. By taking an air sample for a longer period of time the spore density in the measurement sample will also have increased. The control optionally operates autonomously by selecting the sampling time durations on the basis of measurements and/or predictions of ambient conditions.

The control is preferably also operatively connected to communication means. The communication means for instance provide for transmission of measurement results. It is thus possible in the case of potato production for the control to generate a fungus control signal using the communication means such that fungicides can be used in effective manner at the moment this is also actually desirable. This achieves that the overall quantity of fungicides used during a season can be significantly reduced.

The spores which can be detected are for instance Phytophthora, Alternaria, Botrytis and Fusarium. The spores are preferably further characterized, for instance as Phytophthora, and in particular Phytophthora Infestans which affects potatoes and tomatoes. Phytophthora Infestans has a typical size of about 20 by 40 µm. Alternaria has a typical size of about 60 by 3.5 µm. This is therefore a possible characteristic with which a classification of spores is possible. Further detection and specification of other

Phytophthora species and possible other fungal species are also possible according to the invention.

The invention further relates to a method for detecting spores, wherein the method makes use of a device as described above.

The method provides the same advantages and effects as described above for the device according to the invention.

Further advantages, features and details of the invention are elucidated on the basis of preferred embodiments thereof, wherein reference is made to the accompanying drawings, in which:
- Figure 1 shows a view of a device according to the invention at a location;
- Figure 2 shows a view of the device of figure 1;
- Figures 3A-C show the inlet and separating device of the device of figure 1;
- Figure 4 shows the detector with liquid channel of the device of figure 1;
- Figure 5 is a schematic representation of the holder with adjustment option for the liquid channel of figure 4;
- Figure 6 is a view of (processed) images from the camera of figure 4;
- Figure 7 shows an example of an exemplary developed image; and
- Figure 8 shows a view of an alternative embodiment of the device according to the invention.

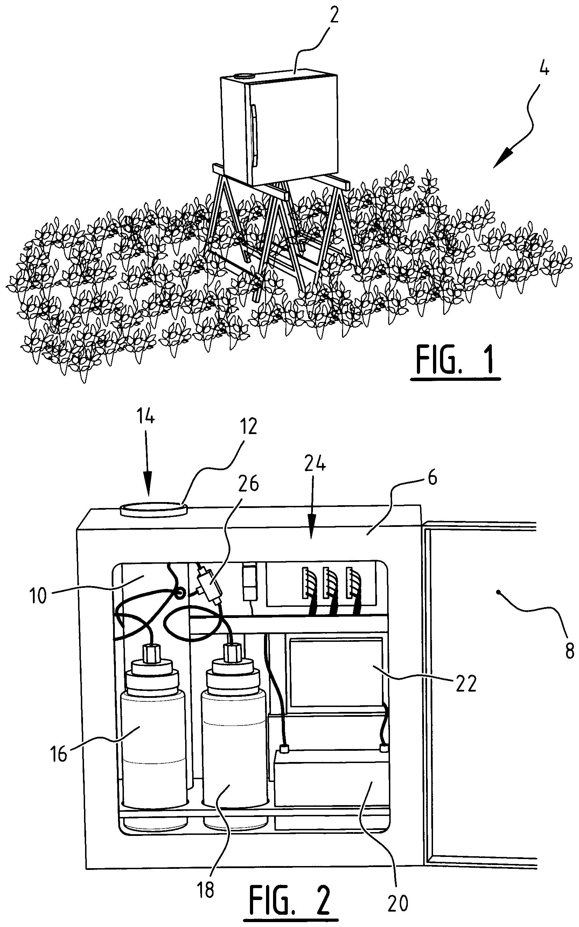

A device 2 (Figure 1) is placed in a potato field 4. Device 2 (Figure 2) is provided with a housing 6 with a door 8. In housing 6 is a spore catcher 10 provided with an inlet 12 with a filter (not shown) having in the shown embodiment a mesh width of about 2 mm. Air can be introduced into cyclone 14 via inlet 12. Housing 6 is also provided with a first liquid reservoir 16 with liquid for producing a measurement sample and cleaning, and a second liquid reservoir 18 for cleaning liquid, for instance ethanol, for cleaning liquid ring 36. Also provided are a measuring box with battery 20 for the purpose, among others, of autonomous functioning of the device at a location, transformer 22 which provides for charging of battery 20, a control 24 and a number of valves 26.

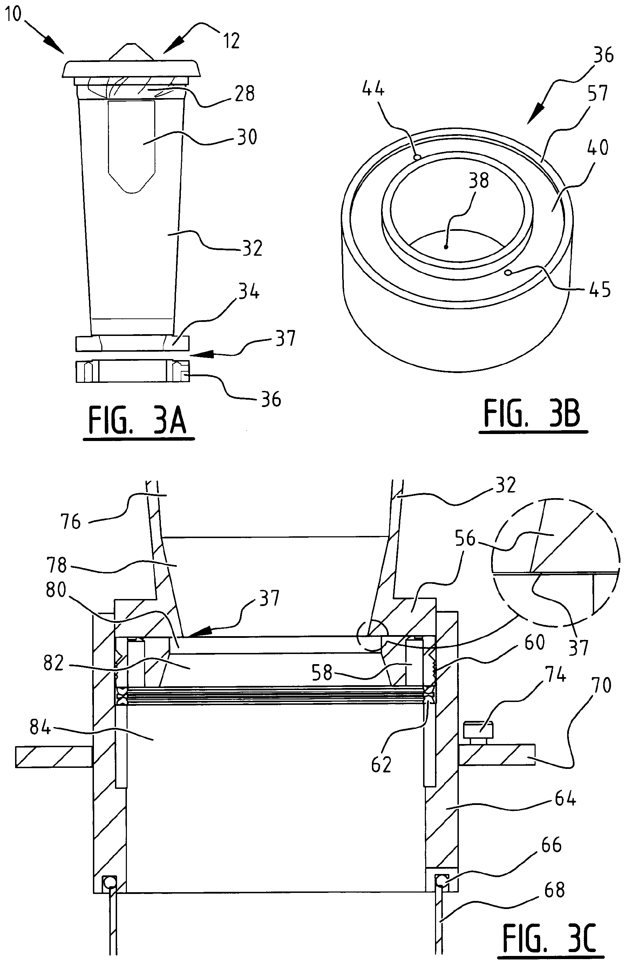

Spore catcher 10 (Figure 3A) comprises an inlet 12 with which air (about 100 liter/sec) can be drawn in using fan 28 which is driven by motor 30 (about 300 W). Spore catcher 10 further comprises a cyclone 32 provided at the outer end with a first compressing cone 34. During use cone 34 is connected to liquid ring 36 (Figure 3B).

In cyclone 32 the large particles in the indrawn air are flung outward in the first cone 34. Through use of the additional reversed second cone an opposite mechanism occurs wherein smaller particles, including for instance fungal spores, are carried outward. Provided between first cone 34 and ring 36 is a gap-like opening 37 of for instance about 150-200 µm. This gap-like opening holds back larger particles and allows through small particles such that access is gained to the upper side of ring 36.

Liquid ring 36 has a central opening 38 for the discharge of air and large particles from cyclone 32. Ring 36 is also provided with a channel 40 in which a liquid from reservoir 16 can be arranged for the purpose of collecting spores from the air sample. A measurement sample is realized in channel 40 by admitting air into cyclone 32 for a determined period of time.

Ring 40 has a feed 44. A discharge 45 is also provided.

Cyclone 32 (Figure 3C) is provided with flange 56. In the shown embodiment flange 56 rests on outer edge 57 of ring 36. Ring 36 is provided with discharge channel 58 and outer screw thread 60. X-ring 62 is situated under ring 36. Ring 36 and X-ring 62 are provided in housing 64. Housing 64 is connected on the underside via seal 66 to wall part 68 for the discharge of air. Housing 64 is further provided with flange 70 and bolt 74 for fixing of the whole. Cyclone 32 has a first tapering part 76 which transposes into a second part 78 tapering with a larger angle. Heavy particles are pressed outward herein. This therefore forms the first cone. Ring 36 is provided with a cylindrical part 80 and an expansion part 82 as second cone. From part 82 air flows into the relatively wide cylindrical part 84 of housing 64. It has been found that at the transition of parts 78 and 80 at least a part of the small elements present in the air, such as spores, are carried through gap 37 to channel 40. Using the channel the analysis of these particles can then be performed.

After the period of time the measurement sample is further guided via discharge 45 to detector 46 using a pump (not shown).

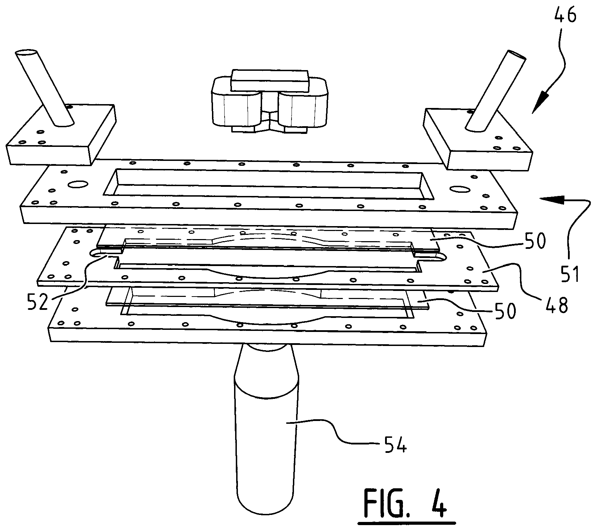

Detector 46 (Figure 4) is provided with a holder 48 in which a glass plate 50 is arranged on the upper side and lower side. Using clamping means 51 a liquid channel 52 is provided between glass plates 50 in holder 48.

Using the selection of, in particular, the thickness of holder 48, which thereby functions as a kind of spacer, the height of channel 52 is set. The height of channel 52 is changed by using a different holder 48.

The image sample obtained from the measurement sample present in channel 40 and carried into channel 52 is measured using camera 54 in order to obtain one or more images of the measurement sample.

In the shown embodiment the volume of liquid channel 40 is about 1 ml. The volume of the sample of about 1 ml is guided through the flow cell, embodied as flow/measuring channel 52 for the purpose of the image sample, so that the whole sample can be analyzed. This means that it is possible to make an image sample of each measurement sample. If desired, it is possible to increase the volume of flow channel 52 such that multiple image samples of each measurement sample are possible, for instance in order to increase the measurement accuracy and/or for instance to detect fungal spores of different dimensions. In the shown embodiment glass plates 50 on either side of flow channel 52 are uniformly adjustable so as to thereby keep the focal distance of the camera the same for all spore sizes.

The setting of flow channel 52 takes place using adjusting screws which influence the height of the channel. The volume of flow channel 52 is hereby adjustable and it is possible to take account of particle size and desired sampling volume.

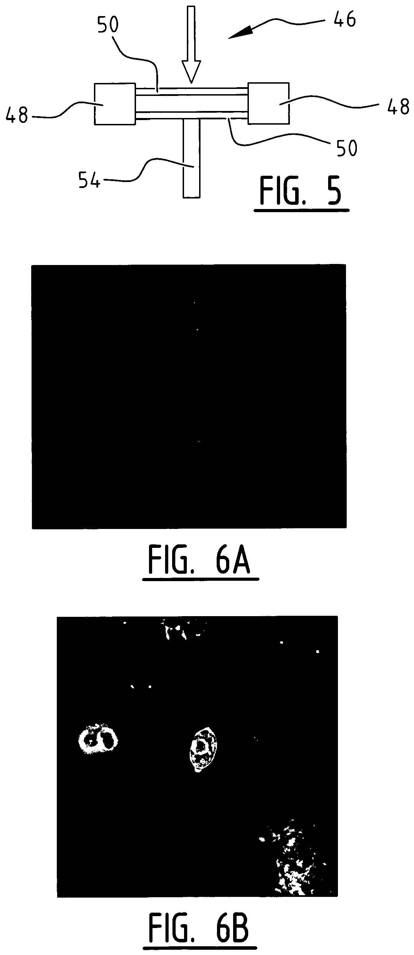

In the shown embodiment the camera is of the AVT Pike-F505B ASG 16 type provided with an adapter tube and, in the shown embodiment, with LED lighting. The camera has an image sensor with dimensions of 8.5 by 7.1 mm. The dimensions of flow channel 52 can be adapted to the volume of the image sample using adjusting means 54 (Figure 5).

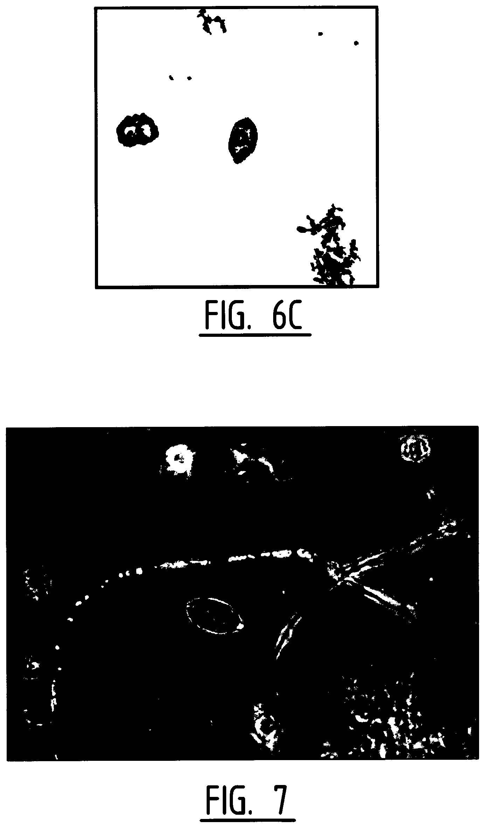

In the shown embodiment the images made with camera 54 are further processed in order to enable analysis. Use is preferably made of phase contrast microscopy. By means of the processing an image (Figure 6A) with Phytophthora spores at an enlargement of 200 times is modified using contrast processing (Figure 6B), and made suitable in a subsequent step (Figure 6C) for detection on the basis of morphology/morphometry. One or more characteristics such as surface, length-width ratio, shape etc. of each particle on the image are determined here using image recognition. Using a classification algorithm this particle is then, in the shown embodiment using a type of neural network, categorized as a specific fungal spore. If desired, this can be displayed on an exemplary developed image (Figure 7), as shown for a Phytophthora spore.

In order to perform a measurement an air sample is taken by control 24 for a period of time using spore catcher 10. This air sample is converted with liquid ring 36 to a measurement sample. In the shown embodiment one or more images are made of the measurement sample in detector 46 using camera 54. Following processing, these images are analyzed and one or more characteristics are determined for each relevant particle visible thereon. On the basis of the characteristics the particles are categorized as a specific fungal spore or optionally as a further non-defined particle. A measurement is hereby obtained of the species and concentration of fungal spores in the air. The species follows from the classification. The concentration follows from the number of particles in a class per image and the period of time for which the associated original air sample was taken. This may be a reason for the control to generate a warning and/or fungus control signal in order to protect a crop at the moment this is actually desirable.

The time duration for collecting spores can be regulated, thus creating the possibility of sample exploration. The collection time, or the sampling time period, is hereby modified subject to previous measurements. This is carried out manually or preferably automatically by the control. If a small number of spores are detected, the collection time can for instance thus be lengthened such that in a subsequent measurement more spores are collected in the measurement sample and a more reliable measurement can be performed. Typical collection times amount for instance to 1 to 100 minutes.

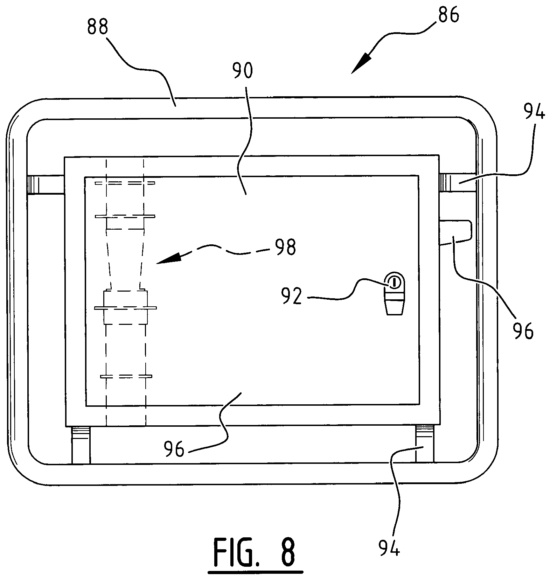

In a further embodiment of a device 86 according to the invention (Figure 8) an edge 68 is arranged around device 86. Access to the components of device 86 can be gained via door 90 provided with lock 92. Edge 88 is secured to device 86 with brackets 94. An external connection 96, for instance for power supply, is optionally provided. Cyclone 98 is arranged in device 86 in similar manner as shown for device 2.

During an experiment for measuring Phytophthora spores in the air it was found that the device according to the invention is able to recognize such spores so that it is possible for instance to generate an alarm. On the basis hereof it can for instance be decided to apply a fungicide. This achieves that the use thereof takes place only if actually necessary.

During the experiment it was also found that the device is able to distinguish between the different stages or types of Phytophthora, i.e. the asexual spores Sporangia and Zoospore and the sexual spores Oospore. It was found that it is hereby possible to take the detected types into account in the fungus control recommendation and to adapt the fungus control thereto. When Sporangium is for instance detected, fungicide can be sprayed immediately so as to prevent Zoospore propagating there from and infecting the plant.

The present invention is by no means limited to the above described preferred embodiments thereof. The rights sought are defined by the following claims, within the scope of which many modifications can be envisaged.

## Claims

1. Device (2) for detecting spores, comprising:
- a housing (6);
- an inlet (12) for taking an air sample;
- a separating device (10) connected to the inlet for separating particles in the air sample; and
- a measuring and analysis element (46) for measuring the particles from the air sample and analyzing the measurement,
wherein the separating device comprises:
- a cyclone (32),
- a central discharge (38) for discharging air with relatively large particles in the vicinity of the central axis of the cyclone, and
- a second discharge for discharging air with relatively small particles, the second discharge comprising an annular channel (40) in which the relatively small particles are collected,
the device being **characterized in that** the separating device further comprises:
- a first hollow truncated cone (34) arranged to compress the air exiting the cyclone;
- a second hollow truncated cone (82) arranged to expand the indrawn air exiting said first cone,
wherein the second discharge is located between said first and second cones.

2. Device as claimed in claim 1, wherein the inlet is provided with a fan (28) for drawing in an air sample.

3. Devices claimed in claim 1 or 2, wherein the second discharge comprises a gap-like opening (37) allowing smaller particles to the annular channel (40).

4. Device according to claim 3, wherein the gap-like opening is about 150 µm.

5. Device as claimed in one or more of the foregoing claims, wherein the second discharge is operatively connected to a sampling element in which a channel (52) is provided for collecting the relatively small particles.

6. Device as claimed in claim 5, wherein during use the channel for taking a sample is provided with a measurement liquid.

7. Device as claimed in one or more of the foregoing claims, wherein the measuring and analysis element comprises a measuring channel (52) for performing a measurement on a sample.

8. Device as claimed in claim 7, wherein the measuring channel comprises adjusting means (54) for adjusting the dimensions of the measuring channel.

9. Device as claimed in one or more of the foregoing claims, further comprising a control element (24) such that the device can operate autonomously.

10. Method for detecting spores, wherein use is made of a device (2) as claimed in one or more of the foregoing claims.

11. Method according to claim 10, wherein the spores comprise Phytophtora.

## Patentansprüche

1. Vorrichtung (2) zum Erfassen von Sporen, umfassend:
- ein Gehäuse (6);
- einen Einlass (12) zur Entnahme einer Luftprobe;
- eine mit dem Einlass verbundene Trennvorrichtung (10), zum Trennen von Teilchen in der Luftprobe; und
- ein Mess- und Analyseelement (46) zum Messen von Teilchen aus der Luftprobe und zum Analysieren der Messung,
wobei die Trennvorrichtung umfasst:
- einen Zyklon (32),
- einen zentralen Auslass (38) zum Ablassen von Luft mit relativ großen Teilchen in der Nähe der zentralen Achse des Zyklon, und
- einen zweiten Auslass zum Ablassen von Luft mit relativ kleinen Teilchen, wobei der zweite Auslass einen ringförmigen Kanal (40) umfasst, in dem die relativ kleinen Teilchen gesammelt werden,
wobei die Vorrichtung **dadurch gekennzeichnet ist, dass** die Trennvorrichtung ferner umfasst:
- einen ersten hohlen Kegelstumpf (34), der angeordnet ist, um die aus dem Zyklon austretende Luft zu komprimieren;
- einen zweiten hohlen Kegelstumpf (82), der angeordnet ist, um die eingesaugte Luft, die aus dem ersten Kegelstumpf austritt auszudehnen,
wobei der zweite Auslass zwischen den ersten und zweiten Kegelstümpfen angeordnet ist.

2. Vorrichtung nach Anspruch 1, wobei der Einlass mit einem Ventilator (28) zum Einsaugen einer Luftprobe ausgestattet ist.

3. Vorrichtung nach Anspruch 1 oder 2, wobei der zweite Auslass eine spaltartige Öffnung (37) umfasst, die kleinere Teilchen zu dem ringförmigen Kanal (40) lässt.

4. Vorrichtung nach Anspruch 3, wobei die spaltartige Öffnung etwa 150 µm beträgt.

5. Vorrichtung nach einem oder mehreren der vorhergehenden Ansprüche, wobei der zweite Auslass wirkend mit einem Probeentnahmeelement verbunden ist, in dem ein Kanal (52) zum Sammeln der relativ kleinen Teilchen vorgesehen ist.

6. Vorrichtung nach Anspruch 5, wobei der Kanal bei Gebrauch zum Entnehmen einer Probe mit einer Messflüssigkeit ausgestattet ist.

7. Vorrichtung nach einem oder mehreren der vorhergehenden Ansprüche, wobei das Mess- und Analyseelement einen Messkanal (52) zur Durchführung einer Messung an einer Probe umfasst.

8. Vorrichtung nach Anspruch 7, wobei der Messkanal Einstellmittel (54) zum Einstellen der Abmessungen des Messkanals umfasst.

9. Vorrichtung nach einem oder mehreren der vorhergehenden Ansprüche, die ferner ein Steuerelement (24) umfasst, so dass die Vorrichtung autonom arbeiten kann.

10. Verfahren zum Erfassen von Sporen, wobei eine Vorrichtung (2) nach einem oder mehreren der vorhergehenden Ansprüche verwendet wird.

11. Verfahren nach Anspruch 10, wobei die Sporen Phytophtora umfassen.

## Revendications

1. Dispositif (2) de détection de spores, comprenant :
- un boîtier (6) ;
- un orifice d'entrée (12) destiné à prélever un échantillon d'air ;
- un dispositif de séparation (10) raccordé à l'orifice d'entrée afin de séparer des particules dans l'échantillon d'air ; et
- un élément de mesure et d'analyse (46) destiné à mesurer les particules à partir de l'échantillon d'air et à analyser la mesure,
dans lequel le dispositif de séparation comprend :
- un conduit d'air (32),
- un élément de déchargement central (38) destiné à décharger l'air ayant des particules relativement grosses à proximité de l'axe central du conduit d'air, et
- une second élément de déchargement destiné à décharger l'air ayant des particules relativement petites, le second élément de déchargement comprenant un canal annulaire (40) dans lequel les particules relativement petites sont collectées,
le dispositif étant **caractérisé en ce que** le dispositif de séparation comprend en outre :
- un premier cône tronqué creux (34) agencé de manière à comprimer l'air sortant du conduit d'air ;
- un second cône tronqué creux (82) agencé de manière à détendre l'air admis, sortant dudit premier cône,
dans lequel le second élément de déchargement est situé entre lesdits premier et second cônes.

2. Dispositif selon la revendication 1, dans lequel l'orifice d'entrée comporte un ventilateur (28) destiné à aspirer un échantillon d'air.

3. Dispositif selon la revendication 1 ou 2, dans lequel le second élément de déchargement comprend une ouverture en forme d'interstice (37) permettant le passage de particules plus petites vers le canal annulaire (40).

4. Dispositif selon la revendication 3, dans lequel l'ouverture en forme d'interstice présente une largeur de 150 µm environ.

5. Dispositif selon une ou plusieurs des revendications précédentes, dans lequel le second élément de déchargement est relié de manière opérationnelle à un élément d'échantillonnage dans lequel un canal (52) est agencé afin de collecter les particules relativement petites.

6. Dispositif selon la revendication 5, dans lequel, au cours de l'utilisation, le canal de prélèvement d'un échantillon comporte un liquide de mesure.

7. Dispositif selon une ou plusieurs des revendications précédentes, dans lequel l'élément de mesure et d'analyse comprend un canal de mesure (52) afin d'exécuter une mesure sur un échantillon.

8. Dispositif selon la revendication 7, dans lequel le canal de mesure comprend un moyen de réglage (54) afin de régler les dimensions du canal de mesure.

9. Dispositif selon une ou plusieurs des revendications précédentes, comprenant en outre un élément de commande (24) de telle sorte que le dispositif peut fonctionner de manière autonome.

10. Procédé de détection des spores, dans lequel un dispositif (2) selon une ou plusieurs des revendications précédentes est utilisé.

11. Procédé selon la revendication 10, dans lequel les spores comprennent du Phytophtora.
